# EUROPEAN PATENT APPLICATION

(11) **EP 4 659 588 A1**
(43) Date of publication of application: **10.12.2025**
(21) Application number: 24750194.3
(22) Date of filing: 29.01.2024
(51) Int. Cl.: A23L 2/00

(54) **BEVERAGE FILLED INTO SPRAY CONTAINER**

(30) Priority: 01.02.2023 JP 2023014007
(71) Applicant: Suntory Holdings Limited, Osaka-shi, Osaka 530-8203 (JP)
(72) Inventor: OSADA, Tomoya, Kawasaki-shi, Kanagawa 211-0067 (JP); FUJIWARA, Yasuko, Kawasaki-shi, Kanagawa 211-0067 (JP); SOGUCHI, Akira, Kawasaki-shi, Kanagawa 211-0067 (JP)
(74) Representative: Vossius & Partner Patentanwälte Rechtsanwälte mbB
(86) International application number: PCT/JP2024/002617
(87) International publication number: WO 2024/162245

(57) **Abstract**

An object of the present invention is to provide a beverage filled in a spraying container in which a satisfying sensation of drinking can be perceived and a thirst-quenching sensation can be obtained when drunk. In the beverage, adjustment is made to satisfy conditions (a) to (c): (a) having a water activity of 0.94 or more; (b) having a degree of sweet taste of 4 to 30, and/or having an acidity of 0.005 to 6.0; and (c) being filled in a pump type spraying container with an amount sprayed per push of 0.3 mL or more, or in an aerosol type spraying container.

## Description

### TECHNICAL FIELD

The present invention relates to a beverage filled in a spraying container, and more specifically, to a beverage that has a satisfying sensation of drinking and in which a thirst-quenching sensation can be obtained even though it is filled in a spraying container.

### BACKGROUND ART

Conventionally, many beverage products in the market are sold where they are filled in containers such as PET bottles or cans. As for such beverage products, businessmen who often work outside the office and those who frequently serve customers cannot easily ingest a large amount of beverages, and since beverage products are rather heavy when outside the office, they are sometimes slightly inconvenient to carry around.

On the other hand, there are some products in the market in which an orally ingestible liquid is filled in a spray type container, but most of them are so-called mouth sprays that are intended to give a refreshing sensation to the mouth, suppress bad breath, and sterilize the inside of the mouth (PTL 1 and PTL 2). In some cases, aerosol type food products in which soy sauce, fresh cream, and the like are accommodated instead of beverages are found, but products in which beverages themselves that can be drunk in a large amount at once are filled in spraying containers are rarely seen.

### CITATION LIST

### PATENT LITERATURE

PTL 1: Japanese Patent Laid-Open No. 2022-104235
PTL 2: Japanese Patent Laid-Open No. 2012-193153

### SUMMARY OF INVENTION

### TECHNICAL PROBLEM

During the process of researching and developing beverages filled in spraying containers, the present inventors found that the use of spraying containers poses problems such as lack of satisfying sensation of drinking as perceived in conventional beverage products and also insufficiency in terms of providing moisture to the inside of the mouth. Therefore, an object of the present invention is to provide a beverage filled in a spraying container in which a satisfying sensation of drinking can be perceived and a thirst-quenching sensation can be obtained when drunk.

### SOLUTION TO PROBLEM

As a result of diligent studies in order to solve the above problems, the present inventors found that, by using a predetermined spraying container, increasing the water activity of the beverage to be filled in the container, and adjusting the degree of sweet taste or acidity of the beverage to a predetermined range, a beverage in which a satisfying sensation of drinking can be perceived and a thirst-quenching sensation can be obtained even when filled in a spraying container. Based on these findings, the present inventors completed the present invention.

That is, the present invention relates to, but is not limited to, the following.
(1) A beverage satisfying the following conditions (a) to (c):
   (a) having a water activity of 0.94 or more;
   (b) having a degree of sweet taste of 4 to 30, and/or having an acidity of 0.005 to 6.0; and
   (c) being filled in a pump type spraying container with an amount sprayed per push of 0.3 mL or more, or in an aerosol type spraying container.
(2) The beverage according to (1), wherein a total content of monosaccharides and disaccharides, excluding sugar alcohols, is 20 g/L or less.
(3) The beverage according to (1) or (2), having a water activity of 0.97 to 1.0.
(4) The beverage according to any one of (1) to (3), having a degree of sweet taste of 5 to 20.
(5) The beverage according to any one of (1) to (4), having an acidity of 0.01 to 5.
(6) The beverage according to any one of (1) to (5), wherein an amount sprayed per push in the pump type spraying container is 0.3 to 5 mL.
(7) The beverage according to any one of (1) to (5), being filled in an aerosol type spraying container.

### ADVANTAGEOUS EFFECTS OF INVENTION

According to the present invention, there can be provided a beverage filled in a spraying container in which a satisfying sensation of drinking can be perceived and a thirst-quenching sensation can be obtained when drunk. By utilizing the beverage of the present invention, a satisfying sensation of drinking and a thirst-quenching sensation can be obtained with a smaller amount of ingestion compared to conventional beverage products. In addition, the utilization of a spraying container allows the container to be lightweight and compact, making it easier to be carried outside the office.

### DESCRIPTION OF EMBODIMENTS

Hereinafter, the present invention will be described. Note that, unless otherwise noted, "ppm," "ppb," and "% by weight" used herein refer to ppm, ppb, and % by weight in weight/volume (w/v), respectively.

One aspect of the present invention is a beverage satisfying the following conditions (a) to (c):
(a) having a water activity of 0.94 or more;
(b) having a degree of sweet taste of 4 to 30, and/or having an acidity of 0.005 to 6.0; and
(c) being filled in a pump type spraying container with an amount sprayed per push of 0.3 mL or more, or in an aerosol type spraying container. By adopting such a configuration, in the beverage filled in a spraying container, a satisfying sensation of drinking can be perceived and a thirst-quenching sensation can be obtained when drunk.

### (Water activity)

The beverage of the present invention has a water activity of 0.94 or more. In the present invention, the value of water activity can be adjusted by adjusting the amounts of various components contained in the beverage. Although the water activity of the beverage of the present invention is not particularly limited as long as it is 0.94 or more, it is preferably 0.95 or more, more preferably 0.96 or more, still more preferably 0.97 or more, and still more preferably 0.98 or more. In addition, the water activity of the beverage of the present invention is 1.0 or less. The water activity can be measured using a known water activity measuring apparatus, and for example, it can be measured using AquaLab 4TE (Meter Japan, Inc.). Note that the water activity in the beverage of the present invention is a water activity measured under the condition where the temperature of the beverage is 25°C.

### (Degree of sweet taste)

The beverage of the present invention may have a degree of sweet taste of 4 to 30. In the present invention, the degree of sweet taste is an index representing the sweet taste of a beverage, where the sweetness of a beverage containing 1 g of sucrose in 100 g of the beverage is defined as "1". The degree of sweet taste of a beverage is determined by converting the content of each sweet taste component into the equivalent amount of sucrose based on the relative ratio of the sweet taste of that sweet taste component to the sweet taste of sucrose, 1, and then summing up the sucrose sweet taste equivalents of all sweet taste components (including sweet taste components derived from fruit juices, extracts, etc.) contained in the beverage. For the degree of sweet taste of a sweet taste component relative to sucrose, the degree of sweet taste provided by the manufacturer that produces or sells that sweet taste component, or the degree of sweet taste obtained through sensory evaluation can be utilized.

In the present invention, the degree of sweet taste of the beverage is preferably 5 to 20, and more preferably 5 to 15. When the degree of sweet taste of the beverage is within the above range, a satisfying sensation of drinking tends to be perceived more strongly and a thirst-quenching sensation also tends to be stronger when it is drunk by spraying.

In the beverage of the present invention, the degree of sweet taste of the beverage can be adjusted using a sweet taste component. As the sweet taste component, for example, sweet taste components ordinarily used in the beverage field can be used, but sweet taste components used outside the beverage field may also be used. In the present invention, a sweet taste component may be compounded directly into the beverage as a sweetener, or a fruit juice, an extract, etc. containing a sweet taste component may be compounded.

The preferred sweet taste component in the beverage of the present invention is a sugar alcohol. Examples of the sugar alcohol include, but are not limited to, a monosaccharide alcohol such as xylitol, erythritol, sorbitol, and mannitol; a disaccharide alcohol such as maltitol, isomaltitol, and lactitol; a trisaccharide alcohol such as maltotriitol, isomaltotriitol, and panitol; a tetra- or higher-saccharide alcohol such as an oligosaccharide alcohol; and a powdered reduced maltose syrup. The preferred sugar alcohol used in the present invention is a monosaccharide alcohol, of which xylitol, erythritol, and sorbitol are more preferable. In the beverage of the present invention, these sugar alcohols may be used alone, or a combination of two or more sugar alcohols may be used.

The content of the sugar alcohol in the beverage of the present invention can be set depending on the degree of sweet taste of the beverage and the type of the sugar alcohol, as described above. In other words, the sugar alcohol can be contained in the beverage of the present invention in such an amount that the degree of sweet taste of the beverage is 4 to 30, preferably 5 to 20, and more preferably 5 to 15.

Also, in the case where the sugar alcohol is xylitol, the content in the beverage of the present invention is preferably 40 to 300 g/L, more preferably 50 to 200 g/L, and still more preferably 50 to 150 g/L.

In the case where the sugar alcohol is erythritol, the content in the beverage of the present invention is preferably 50 to 370 g/L, more preferably 60 to 250 g/L, and still more preferably 60 to 190 g/L.

In the case where the sugar alcohol is sorbitol, the content in the beverage of the present invention is preferably 66 to 500 g/L, more preferably 82 to 333 g/L, and still more preferably 82 to 250 g/L.

The content of the sugar alcohol compounded in the beverage of the present invention can be measured by known methods such as HPLC method.

In addition to the sugar alcohol described above, the preferred sweet taste component in the beverage of the present invention is a high intensity sweetener. The high intensity sweetener means a sweetener that has sweet taste 10 to 10,000 times that of sugar (sucrose). As the high intensity sweetener used in the present invention, any high intensity sweetener, both natural sweeteners and synthetic sweeteners, can be used. Specific examples of the type of the high intensity sweetener include, but are not limited to, sucralose, acesulfame potassium, aspartame, stevia (rebaudioside, stevioside), somatin, saccharin, sodium saccharin, licorice, Momordica grosvenori, neotame, mabinlin, brazzein, monellin, glycyrrhizin, alitame, sodium N-cyclohexylsulfamate, dulcin, and neohesperidin. The preferred high intensity sweeteners used in the present invention are acesulfame potassium and sucralose. In the beverage of the present invention, one of these high intensity sweeteners or two or more of them can be used. In the beverage of the present invention, the high intensity sweetener can also be compounded in combination with a sugar alcohol.

The content of the high intensity sweetener in the beverage of the present invention can be set depending on the degree of sweet taste of the beverage and the type of the high intensity sweetener, as described above. In other words, the high intensity sweetener can be contained in the beverage of the present invention in such an amount that the degree of sweet taste of the beverage is 4 to 30, preferably 5 to 20, and more preferably 5 to 15.

Also, in the case where the high intensity sweetener is sucralose, the content in the beverage of the present invention is preferably 66 to 500 mg/L, more preferably 82 to 333 mg/L, and still more preferably 82 to 250 mg/L.

In the case where the high intensity sweetener is acesulfame potassium, the content in the beverage of the present invention is preferably 200 to 1500 mg/L, more preferably 250 to 1000 mg/L, and still more preferably 250 to 750 mg/L.

The content of the high intensity sweetener compounded in the beverage of the present invention can be measured by known methods such as HPLC method.

### (Acidity)

The beverage of the present invention may have an acidity of 0.005 to 6.0. In the present invention, the acidity is a value that serves as an index of acid content, and can be determined by calculation from, when an alkali such as sodium hydroxide is added to a certain amount of beverage (sample) for neutralization, the amount of the alkali required for neutralization (pH 7.0). For acidity measurement, an autotitrator (Kyoto Electronics Manufacturing Co., Ltd., AT-710/CHA-700, etc.) can be used. In the present invention, the acidity used is the value converted to the amount of citric acid (determined by calculation from the neutralization amount, assuming that all the acid contained in the beverage is citric acid). Also, the unit of acidity in the present invention is "g/100 mL".

In the present invention, the acidity of the beverage is preferably 0.01 to 6, and more preferably 0.05 to 5. When the acidity of the beverage is within the above range, a satisfying sensation of drinking tends to be perceived more strongly and a thirst-quenching sensation also tends to be stronger when it is drunk by spraying.

The acidity of the beverage of the present invention may be adjusted using any acid. For example, the acidity of the beverage can be adjusted using, but not limited to, citric acid, phosphoric acid, tartaric acid, malic acid, oxalic acid, gluconic acid, ascorbic acid, succinic acid, lactic acid, acetic acid, sulfuric acid, hydrochloric acid, fumaric acid, phytic acid, itaconic acid, or other acids. In the present invention, the acidity can also be adjusted by using a fruit juice (this may be either clear fruit juice or cloudy fruit juice), a food additive standard acidulant, etc.

The content of the acid in the beverage of the present invention can be set depending on the acidity of the beverage and the type of the acid, as described above. In other words, the acid can be contained in the beverage of the present invention in such an amount that the acidity of the beverage is 0.005 to 6.0, preferably 0.01 to 6, and more preferably 0.05 to 5. Specifically shown, in the case of using citric acid as the acid, the content of citric acid in the beverage of the present invention is, for example, 0.05 to 60 g/L, preferably 0.1 to 60 g/L, and more preferably 0.5 to 50 g/L.

### (Monosaccharides and disaccharides)

In the beverage of the present invention, the total content of monosaccharides and disaccharides, excluding sugar alcohols, may be 20 g/L or less. In this way, the sweet taste peculiar to the monosaccharides and disaccharides, excluding sugar alcohols, can be reduced. In addition, by reducing the total content of the monosaccharides and disaccharides, excluding sugar alcohols, the calories originating from those sugars can be suppressed, and the ability to control microorganism growth in the beverage can also be enhanced.

In the beverage of the present invention, the total content of the monosaccharides and disaccharides, excluding sugar alcohols, is preferably 15 g/L or less, more preferably 10 g/L or less, still more preferably 5 g/L or less, and most preferably 0 g/L (that is, no monosaccharides and disaccharides, excluding sugar alcohols, are contained). Although the monosaccharides, excluding sugar alcohols, are not particularly limited, specific examples thereof may include glucose, fructose, D-xylose, and L-arabinose. In addition, specific examples of the disaccharides, excluding sugar alcohols, may include, but are not limited to, sucrose and lactose.

In the beverage of the present invention, the total content of the monosaccharides and disaccharides, excluding sugar alcohols, can be measured by known methods such as HPLC method.

### (Other components)

In the beverage of the present invention, various additives and the like may be compounded, as in ordinary beverages, to the extent that the effects of the present invention are not hindered. Examples of the various additives may include a nutritional supplement, an antioxidant, an emulsifier, a preservative, an extract, a dietary fiber, a pH adjusting agent, and a quality stabilizer.

The beverage of the present invention may contain γ-aminobutyric acid (GABA). Although the content of γ-aminobutyric acid in the beverage of the present invention is not particularly limited, it is, for example, 0.1 to 100 g/L, preferably 0.1 to 50 g/L, and more preferably 1 to 50 g/L.

The beverage of the present invention may also contain theanine. Although the content of theanine in the beverage of the present invention is not particularly limited, it is, for example, 0.1 to 100 g/L, preferably 0.1 to 50 g/L, and more preferably 1 to 50 g/L.

The beverage of the present invention may also contain caffeine. Although the content of caffeine in the beverage of the present invention is not particularly limited, it is, for example, 1 to 50 g/L, preferably 2 to 20 mg/L, and more preferably 3 to 15 mg/L.

The beverage of the present invention may also contain vitamins. Examples of the vitamins include vitamin A, vitamin B1, vitamin B2, vitamin B6, vitamin B12, niacin, folic acid, pantothenic acid, biotin, inositol, lutein, vitamin C, vitamin D, vitamin E, and vitamin K. Although the content of vitamins in the beverage of the present invention is not particularly limited, it is, for example, 0.1 to 100 mg/L, preferably 0.1 to 80 mg/L, and more preferably 1 to 80 mg/L. Note that the content is the total amount of vitamins.

The beverage of the present invention may also contain hyaluronic acid. Although the content of hyaluronic acid in the beverage of the present invention is not particularly limited, it is, for example, 0.1 to 200 g/L, preferably 0.1 to 150 g/L, and more preferably 1 to 100 g/L.

### (pH)

Although the pH of the beverage of the present invention is not particularly limited, it is, for example, pH 2.0 to 6.0, preferably pH 2.5 to 5.0, and more preferably pH 3.0 to 4.6. Examples of the pH adjusting agent include trisodium citrate, sodium carbonate, sodium hydrogen carbonate, disodium hydrogen phosphate, and potassium carbonate, but in particular, trisodium citrate is most preferable in the present invention.

### (Brix)

Although the Brix of the beverage of the present invention is not particularly limited, it is, for example, 0.2 or more, preferably 1 or more, and more preferably 2 or more. Also, as the upper limit value, the Brix of the beverage of the present invention is, for example, 30 or less, preferably 25 or less, and more preferably 20 or less. The Brix can be evaluated according to the Brix value obtained using a saccharimeter or a refractometer. The Brix value is the value obtained by converting the refractive index measured at 20°C into mass/mass percent of sucrose solution according to the ICUMSA (International Commission for Uniform Methods of Sugar Analysis) conversion table. The unit is shown in "°Bx", "%", or "degree".

### (Beverage)

The type of the beverage of the present invention is not particularly limited, and can be, for example, a refreshing beverage. The beverage of the present invention may be, for example, any of the following: a nutritional beverage, a functional beverage, a flavored water (near water) beverage, a tea beverage (black tea, oolong tea, green tea, etc.), and a coffee beverage. Also, the beverage of the present invention may be a beverage containing carbon dioxide gas (that is, carbonated beverage), or may be a beverage that does not contain carbon dioxide gas (that is, non-carbonated beverage).

### (Spraying container)

The beverage of the present invention is characterized by being filled in a spraying container. That is, the beverage of the present invention is a beverage packaged in a container, and more specifically, a beverage packaged in a spraying container. The spraying container in the present invention is a container whose contents are sprayed in the form of mist, and specifically, an aerosol type spraying container or a pump type spraying container is used. In the present invention, it is preferable to use an aerosol type spraying container. Also, the spraying container may be a container that sprays the contents manually (manual container), or may be a container that sprays the contents by an electric machine (electric container). In addition, the spraying container may be a single spraying container that sprays a predetermined amount of the contents in a single dispensing operation, or may be a continuous spraying container that continuously and persistently sprays the contents while the dispensing operation is carried out (for example, while the actuator part of the spraying container is continuously operated).

In the case of using an aerosol type spraying container, known spraying gases that can be utilized in conventional aerosol products can be used as the propellant, and for example, compressed gases of nitrous oxide gas, nitrogen gas, carbon dioxide gas, etc. can be used. Liquefied gases such as liquefied petroleum gas (LPG) and dimethyl ether (DME) can also be used. Although the spray pressure of the aerosol type spraying container is not limited, the spray pressure at 20°C is, for example, 0.05 to 1.5 MPa, and preferably 0.1 to 1.0 MPa.

In the case where a propellant is used in the present invention, the beverage filled in a spraying container can be produced by preparing the contents (beverage) not containing the propellant, mixing the contents with the propellant, and filling the container with the mixture. Although the content ratio between the contents (beverage) and the propellant is not particularly limited in the present invention, it is, for example, 10:90 to 60:40, and preferably 20:80 to 50:50, in volume ratio.

In addition, for the aerosol type spraying container, a bag-on-valve (BOV) can also be used. The bag-on-valve is an aerosol type container in which the interior of the container is divided into the following two layers: propellant chamber and content (beverage) chamber, by a barrier material (aluminum pouch, etc.) fixed at the bottom of the aerosol valve. The bag-on-valve is characterized by the dual structure of the propellant chamber and the content (beverage) chamber, which prevents the propellant (gas, etc.) from coming into direct contact with the contents, thereby preventing oxidation and alteration of the contents. In addition, the characteristic that spray occurs only when the aerosol can is pressed makes it possible to reduce or adjust the amount used. For the bag-on-valve, those commercially available can be used. In the present invention, a bag-on-valve is preferably used as the aerosol type spraying container.

In the present invention, an aerosol type spraying container can be used in which the amount sprayed per use is, for example, 0.3 mL or more, preferably 0.4 mL or more, and more preferably 0.5 mL or more. For the aerosol type spraying container used in the present invention, although not particularly limited, the amount sprayed in 0.5 seconds is preferably 0.3 mL or more (the amount sprayed in 1 second is 0.6 mL or more), the amount sprayed in 0.5 seconds is more preferably 0.4 mL or more (the amount sprayed in 1 second is 0.8 mL or more), and the amount sprayed in 0.5 seconds is still more preferably 0.5 mL or more (the amount sprayed in 1 second is 1 mL or more). In the present invention, the amount sprayed herein means the amount of the contents sprayed from the spraying container. Although not particularly limited, the aerosol type spraying container in the present invention is preferably used to spray the contents for 0.5 seconds or longer, more preferably used to spray the contents for 1 second or longer, and still more preferably used to spray the contents for 2 seconds or longer. Although the duration of use of the aerosol type spraying container in the present invention is not particularly limited, it is, for example, 10 seconds or shorter.

In the pump type spraying container used in the present invention, the amount sprayed per push is 0.3 mL or more, the amount sprayed per push is preferably 0.4 mL or more, and the amount sprayed per push is more preferably 0.5 mL or more. Although the upper limit value of the amount sprayed is not particularly limited, the amount of the beverage sprayed per push, for example, is 5 mL or less, and preferably 3 mL or less. In the present invention, the amount sprayed per push means the amount of contents sprayed by a single dispensing operation. In the case where the pump head of the pump type spraying container is of trigger type, the amount of contents sprayed by pulling the handle part once corresponds to the amount sprayed per push. In the case where the pump type spraying container is electrically driven to spray the contents intermittently, the amount thereof sprayed at once corresponds to the amount sprayed per push.

The beverage of the present invention can be drunk by injecting it directly into the mouth from the spraying container. The amount of the beverage of the present invention sprayed can be calculated using the difference in weight of the contents before and after the spray and the specific gravity of the contents. In addition, although the amount of the beverage of the present invention filled inside the container is not particularly limited, it is, for example, 10 to 500 mL, preferably 20 to 400 mL, and more preferably 30 to 300 mL.

### (Production method)

In an aspect, the present invention is a method for producing a beverage filled in a spraying container. More specifically, one aspect of the present invention is a method for producing a beverage, the method including:
(a) a step of adjusting the water activity of a beverage to 0.94 or more;
(b) a step of adjusting the degree of sweet taste of the beverage to 4 to 30 and/or adjusting the acidity of the beverage to 0.005 to 6.0; and
(c) a step of filling a pump type spraying container with an amount sprayed per push of 0.3 mL or more, or an aerosol type spraying container with the beverage.

The beverage of the present invention may be produced by compounding the various components described above as appropriate, or by adjusting their content in the beverage. That is, the production method of the present invention can include a step of compounding the components described above and a step of adjusting the content of such components in the beverage. In addition, the production method of the present invention can also include a step of adjusting the pH of the beverage, a step of adjusting the Brix value, etc. In the production method of the present invention, each steps described above may be carried out in any order, as long as the various conditions, etc. in the beverage finally obtained are within the required ranges. Note that the various elements in the beverage production of the present invention, such as the type of components in the beverage and their content, are as described above for the beverage of the present invention, or are obvious from the description thereof.

In addition, the method for producing a beverage of the present invention may include a step of subjecting the beverage to heat sterilization, if necessary. For example, a sterilized beverage packaged in a spraying container can be produced by a method in which heat sterilization, etc. is carried out after the beverage is filled into the spraying container, or by a method in which the beverage is sterilized and then filled into the spraying container in an aseptic environment. The heat sterilization treatment can be carried out according to local regulations (in Japan, the Food Sanitation Act), for example. Specific examples thereof include a method in which the beverage is sterilized at a high temperature for a short time and then filled into a storage container that has been subjected to a sterilization treatment under aseptic conditions (UHT sterilization method), and a retort sterilization method in which the preparation liquid is filled into a storage container and then subjected to a retort treatment. In the case of the UHT sterilization method, the conditions are ordinarily 70 to 150°C for 1 to 60 seconds, and preferably 80 to 130°C for 1 to 30 seconds, and in the case of the retort sterilization method, the conditions are ordinarily 70 to 150°C for 1 to 30 minutes, and preferably 80 to 140°C for 1 to 10 minutes.

### EXAMPLES

Hereinafter, the details of the present invention will be specifically described by means of experimental examples, but the present invention is not limited to them. Also, in the present specification, unless otherwise stated, numerical ranges are described as including their end points.

### <Experimental Example 1>

Using xylitol, which has an equivalent degree of sweet taste to sucrose, sensory evaluation of beverages filled in spraying containers was carried out. Specifically, as shown in the table below, xylitol (B Food Science Co., Ltd.) was dissolved in water to prepare beverages so that the degree of sweet taste of the beverages ranged from 3 to 30, and 30 mL of the various beverages obtained were poured into plastic cups. The tube part of a pump type nozzle (dispenser) (Mitani Valve Co., Ltd., Z-100-113), which is capable of spraying 0.1 mL per push, or a pump type nozzle (dispenser) (Mitani Valve Co., Ltd., Z-500-C038), which is capable of spraying 0.5 mL per push, was inserted into the beverages poured into the cups, thereby preparing beverages in two types of spraying containers.

The water activity of the prepared beverages was measured using the water activity measuring apparatus AquaLab 4TE (Meter Japan, Inc.) under conditions of 25°C. As a result, the water activity of the beverage with a degree of sweet taste of 30 was 0.967. In addition, from this result, the water activity of beverages with a degree of sweet taste below 30 was considered to be 0.967 or more.

In the sensory evaluation test, in order to adjust the amount of beverage injected into the mouth at once, two to four beverages in spraying containers capable of spraying 0.1 mL per push were prepared for the test in which the amount sprayed at once was 0.2 to 0.4 mL, and the beverage was injected into the mouth of the evaluators all at the same time with the help of an assistant. Also, two beverages in spraying containers capable of spraying 0.5 mL per push were prepared for the test in which the amount sprayed at once was 1 mL, and the beverage was injected into the mouth of the evaluators all at the same time by using both hands of the evaluators themselves. By these operations, the test was carried out that was equivalent to the case where a spraying container capable of spraying 0.2 to 0.4 mL or 1 mL per push was used.

As for the sensory evaluation, two expert panelists carried out evaluation of the thirst-quenching sensation and satisfying sensation of drinking of the various beverages. Each expert panelist carried out 5-point evaluation according to the following criteria, and their average score was used as the evaluation score. Also, the results of the total evaluation scores for thirst-quenching sensation and satisfying sensation of drinking were examined as well.

### <Thirst-quenching sensation>

5 points: Strongly perceived.
4 points: Perceived.
3 points: Slightly perceived.
2 points: Hardly perceived.
1 point: Not perceived at all.

### <Satisfying sensation of drinking>

5 points: Strongly perceived.
4 points: Perceived.
3 points: Slightly perceived.
2 points: Hardly perceived.
1 point: Not perceived at all.

**[Table 1]**

| <Thirst-quenching sensation> | | | | | | |
|---|---|---|---|---|---|---|
| | | Amount sprayed [mL] | | | | |
| | | 0.2 | 0.3 | 0.4 | 0.5 | 1 |
| Degree of sweet taste | 30 | 1 | 2 | 2 | 2 | 3 |
| | 20 | 1 | 3 | 3.5 | 4 | 4.5 |
| | 15 | 1 | 3 | 4 | 4.5 | 5 |
| | 5 | 1 | 3 | 4 | 4.5 | 5 |
| | 4 | 1 | 2.5 | 2.5 | 4 | 4 |
| | 3 | 1 | 2 | 2.5 | 3 | 4 |

**[Table 2]**

| <Satisfying sensation of drinking> | | | | | | |
|---|---|---|---|---|---|---|
| | | Amount sprayed [mL] | | | | |
| | | 0.2 | 0.3 | 0.4 | 0.5 | 1 |
| Degree of sweet taste | 30 | 2 | 2.5 | 3 | 3.5 | 4 |
| | 20 | 1 | 3 | 3.5 | 4 | 4.5 |
| | 15 | 1 | 3 | 4 | 4.5 | 5 |
| | 5 | 1 | 3 | 4 | 5 | 5 |
| | 4 | 1 | 1.5 | 1.5 | 2 | 4 |
| | 3 | 1 | 1 | 1.5 | 1.5 | 2 |

**[Table 3]**

| <Total points> | | | | | | |
|---|---|---|---|---|---|---|
| | | Amount sprayed [mL] | | | | |
| | | 0.2 | 0.3 | 0.4 | 0.5 | 1 |
| Degree of sweet taste | 30 | 3 | 4.5 | 5 | 5.5 | 7 |
| | 20 | 2 | 6 | 7 | 8 | 9 |
| | 15 | 2 | 6 | 8 | 9 | 10 |
| | 5 | 2 | 6 | 8 | 9.5 | 10 |
| | 4 | 2 | 4 | 4 | 6 | 8 |
| | 3 | 2 | 3 | 4 | 4.5 | 6 |

The results are as described above, and it was found that a good thirst-quenching sensation and satisfying sensation of drinking could be obtained at a specific degree of sweet taste and a specific amount sprayed. Note that the evaluation points of each expert panelist did not differ by two or more points with respect to the evaluation results of the above test.

### <Experimental Example 2>

The effect of acidity was examined on the thirst-quenching sensation and satisfying sensation of drinking of beverages filled in spraying containers. As shown in the tables below, citric acid (Iwata Chemical Co., Ltd.) was dissolved in water to prepare beverages so that the acidity of the beverages ranged from 0.001 to 6, and 30 mL of the various beverages obtained were poured into plastic cups. In the same manner as in Experimental Example 1 above, beverages in a spraying container capable of spraying 0.1 mL per push and beverages in a spraying container capable of spraying 0.5 mL per push were prepared.

The water activity of the prepared beverages was measured using the water activity measuring apparatus AquaLab 4TE (Meter Japan, Inc.) under conditions of 25°C. As a result, the water activity of the beverage with an acidity of 6 was 0.987. In addition, from this result, the water activity of beverages with an acidity below 6 was considered to be 0.987 or more.

The sensory evaluation test was carried out using the same method and criteria as in Experimental Example 1 above, and two expert panelists carried out evaluation of the thirst-quenching sensation and satisfying sensation of drinking of the various beverages. Also, the results of the total evaluation scores for thirst-quenching sensation and satisfying sensation of drinking were examined as well.

**[Table 4]**

| <Thirst-quenching sensation> | | | | | | |
|---|---|---|---|---|---|---|
| | | Amount sprayed [mL] | | | | |
| | | 0.2 | 0.3 | 0.4 | 0.5 | 1 |
| Acidity | 6 | 2 | 3 | 3.5 | 4 | 4 |
| | 5 | 2 | 3 | 3.5 | 4.5 | 5 |
| | 0.5 | 1.5 | 3 | 4 | 4.5 | 5 |
| | 0.01 | 1 | 2 | 2.5 | 3 | 4 |
| | 0.005 | 1 | 1 | 1.5 | 2 | 3 |
| | 0.001 | 1 | 1 | 1.5 | 2 | 3 |

**[Table 5]**

| <Satisfying sensation of drinking> | | | | | | |
|---|---|---|---|---|---|---|
| | | Amount sprayed [mL] | | | | |
| | | 0.2 | 0.3 | 0.4 | 0.5 | 1 |
| Acidity | 6 | 2 | 3 | 3.5 | 4 | 4.5 |
| | 5 | 2 | 3 | 3.5 | 4.5 | 5 |
| | 0.5 | 1.5 | 3 | 4 | 4.5 | 5 |
| | 0.01 | 1.5 | 2 | 2.5 | 3 | 3.5 |
| | 0.005 | 1 | 1.5 | 2 | 2 | 2.5 |
| | 0.001 | 1 | 1 | 1.5 | 1.5 | 2 |

**[Table 6]**

| <Total points> | | | | | | |
|---|---|---|---|---|---|---|
| | | Amount sprayed [mL] | | | | |
| | | 0.2 | 0.3 | 0.4 | 0.5 | 1 |
| Acidity | 6 | 4 | 6 | 7 | 8 | 8.5 |
| | 5 | 4 | 6 | 7 | 9 | 10 |
| | 0.5 | 3 | 6 | 8 | 9 | 10 |
| | 0.01 | 2.5 | 4 | 5 | 6 | 7.5 |
| | 0.005 | 2 | 2.5 | 3.5 | 4 | 5.5 |
| | 0.001 | 2 | 2 | 3 | 3.5 | 5 |

The results are as described above, and it was found that a good satisfying sensation of drinking and thirst-quenching sensation could be obtained at a specific acidity and a specific amount sprayed. Note that the evaluation points of each expert panelist did not differ by two or more points with respect to the evaluation results of the above test.

### <Experimental Example 3>

Various components were dissolved in water so that the final contents were the amounts shown in the tables below, and three types of beverages were prepared. 30 mL of the various beverages obtained were poured into plastic cups, and in the same manner as in Experimental Example 1 above, beverages in a spraying container capable of spraying 0.5 mL per push were prepared. As for flavorings, jasmine flavor, mint flavor, and lemon flavor were used for sample 1, sample 2, and sample 3, respectively, all of which had no effect on the degree of sweet taste and acidity. For each of the prepared beverages, the pH and water activity (25°C) were measured.

**[Table 7]**

| | Beverage sample 1 | | Beverage sample 2 | | Beverage sample 3 | |
|---|---|---|---|---|---|---|
| Xylitol | 80 | g | 150 | g | 50 | g |
| Citric acid | 15 | g | 5 | g | 50 | g |
| Sodium citrate | 10 | g | 2 | g | 10 | g |
| Sodium benzoate | 0.5 | g | 0.5 | g | 0.5 | g |
| Flavoring | 2 | ml | 5 | ml | 3 | ml |
| Total | 1000 | ml | 1000 | ml | 1000 | ml |
| Degree of sweet taste | 8 | | 15 | | 5 | |
| Acidity | 1.5 | | 0.5 | | 5 | |
| pH | 3.8 | | 3.8 | | 3.1 | |
| Water activity | 0.988 | | 0.970 | | 0.979 | |

Using the same method and criteria as in Experimental Example 1 above, a sensory evaluation test was carried out adjusting the amount sprayed at once to 0.5 mL or 1 mL. In the same manner as in Experimental Example 1 above, two expert panelists carried out evaluation of the thirst-quenching sensation and satisfying sensation of drinking of the various beverages.

**[Table 8]**

| <Thirst-quenching sensation> | | |
|---|---|---|
| | Amount sprayed [mL] | |
| | 0.5 | 1 |
| Beverage sample 1 | 5 | 5 |
| Beverage sample 2 | 5 | 5 |
| Beverage sample 3 | 5 | 5 |

**[Table 9]**

| <Satisfying sensation of drinking> | | |
|---|---|---|
| | Amount sprayed [mL] | |
| | 0.5 | 1 |
| Beverage sample 1 | 5 | 5 |
| Beverage sample 2 | 5 | 5 |
| Beverage sample 3 | 5 | 5 |

The results are as described above, and it was found that for all the beverages a good satisfying sensation of drinking and thirst-quenching sensation can be obtained.

### <Experimental Example 4>

60 mL of each of the three beverage samples used in Experimental Example 3 was filled into an aerosol can (BOV (60 mL) manufactured by Mitani Valve Co., Ltd., initial internal pressure 0.6 MPa). A sensory evaluation test was carried out for the obtained beverages in the aerosol can.

In the sensory evaluation test, the amount sprayed from the aerosol can was thoroughly checked beforehand, and the beverages were injected into the mouths of the evaluators, adjusting the amount of the beverages injected into the mouths to about 0.5 mL or about 1 mL. After injection into the mouths, the amount of weight loss of the beverages in the aerosol can was examined to ensure that the amount sprayed was within the range of 0.5 mL to 0.55 mL or 1 mL to 1.05 mL. Note that the injection time for an amount sprayed of about 0.5 mL was about 0.5 seconds, and the injection time for an amount sprayed of about 1 mL was about 1 second.

As for the sensory evaluation, two expert panelists carried out evaluation of the thirst-quenching sensation and satisfying sensation of drinking of the various beverages. The sensory evaluation was carried out using the same criteria as in Experimental Example 1 above, and the average score was used as the evaluation score.

**[Table 10]**

| <Thirst-quenching sensation> | | |
|---|---|---|
| | Amount sprayed [mL] | |
| | 0.5 | 1 |
| Beverage sample 1 | 5 | 5 |
| Beverage sample 2 | 5 | 5 |
| Beverage sample 3 | 5 | 5 |

**[Table 11]**

| <Satisfying sensation of drinking> | | |
|---|---|---|
| | Amount sprayed [mL] | |
| | 0.5 | 1 |
| Beverage sample 1 | 5 | 5 |
| Beverage sample 2 | 5 | 5 |
| Beverage sample 3 | 5 | 5 |

The results are as described above, and it was found that for all the beverages a good satisfying sensation of drinking and thirst-quenching sensation can be obtained.

## Claims

1. A beverage satisfying the following conditions (a) to (c):
(a) having a water activity of 0.94 or more;
(b) having a degree of sweet taste of 4 to 30, and/or having an acidity of 0.005 to 6.0; and
(c) being filled in a pump type spraying container with an amount sprayed per push of 0.3 mL or more, or in an aerosol type spraying container.

2. The beverage according to claim 1, wherein a total content of monosaccharides and disaccharides, excluding sugar alcohols, is 20 g/L or less.

3. The beverage according to claim 1 or 2, having a water activity of 0.97 to 1.0.

4. The beverage according to claim 1 or 2, having a degree of sweet taste of 5 to 20.

5. The beverage according to claim 1 or 2, having an acidity of 0.01 to 5.

6. The beverage according to claim 1 or 2, wherein an amount sprayed per push in the pump type spraying container is 0.3 to 5 mL.

7. The beverage according to claim 1 or 2, being filled in an aerosol type spraying container.
